# EUROPÄISCHE PATENTANMELDUNG

(11) **EP 4 080 152 A1**
(43) Veröffentlichungstag der Anmeldung: **26.10.2022**
(21) Anmeldenummer: 21020224.8
(22) Anmeldetag: 21.04.2021
(51) Int. Cl.: F28F 9/02, B33Y 80/00

(54) **HEADER FÜR EINEN WÄRMETAUSCHER UND VERFAHREN ZUR HERSTELLUNG**

(71) Anmelder: Linde GmbH, 82049 Pullach (DE)
(72) Erfinder: Aigner, Herbert, Reut-Taubenbach (DE); Hölzl, Reinhold, Geretsried (DE); Englert, Thomas, Gilching (DE)
(74) Vertreter: Meilinger, Claudia Sabine

(57) **Zusammenfassung**

Bereitgestellt wird ein Header (100) für einen Wärmetauscher aus Aluminium oder einer Aluminiumlegierung, umfassend einen Rahmen (103) aus Aluminium oder einer Aluminiumlegierung, der einen um einen Durchgang (110) verlaufenden Grundkörper (104) umfasst; ein Wandelement (105), das eine Wand (106) aus einem korrosionsbeständigen Stahl umfasst, die einen Rand (112) aufweist, der um eine Öffnung (114) verläuft, die in ihrer Form dem Durchgang entspricht; wobei der Rahmen eine sich vom Grundkörper erstreckende umlaufende Rahmen-Eingriffsstruktur (122) umfasst und das Wandelement eine zur Rahmen-Eingriffsstruktur komplementäre, sich vom Rand erstreckende, umlaufende Wand-Eingriffsstruktur (124) umfasst; wobei in einem Übergangsbereich (120) die Rahmen-Eingriffsstruktur mit der Wand-Eingriffsstruktur in Eingriff steht, so dass eine umlaufende formschlüssige Verbindung zwischen dem Rahmen und dem Wandelement ausgebildet ist; wobei zumindest der Übergangsbereich mittels eines additiven Fertigungsverfahrens hergestellt ist. Weiterhin werden ein Wärmetauscher und ein Verfahren zur Herstellung eines Headers bereitgestellt.

## Beschreibung

Die Erfindung betrifft einen Header für einen Wärmetauscher, insbesondere für einen Rippen-Platten-Wärmetauscher, aus Aluminium oder aus einer Aluminiumlegierung, sowie einen Wärmetauscher und ein Verfahren zur Herstellung eines Headers.

### Stand der Technik

Die vorliegende Erfindung betrifft im Allgemeinen Wärmetauscher und im Besonderen gelötete Rippen-Platten-Wärmetauscher aus Aluminium (Brazed Aluminium Plate-Fin Heat Exchangers, PFHE; Bezeichnungen gemäß der deutschen und englischen Ausgabe der ISO 15547-2:3005), wie sie in einer Vielzahl von Anlagen bei unterschiedlichsten Drücken und Temperaturen eingesetzt werden. Entsprechende Wärmetauscher finden beispielsweise Anwendung bei der Tieftemperaturzerlegung von Luft, bei der Verflüssigung von Erdgas oder in Anlagen zur Herstellung von Ethylen. Ist nachfolgend verkürzend von einem "Wärmetauscher" oder "Plattenwärmetauscher" die Rede, sei hierunter stets ein entsprechender (hart-) gelöteter Rippen-Platten-Wärmetauscher aus Aluminium verstanden. Es versteht sich, dass "Aluminium" dabei auch eine Aluminiumlegierung bezeichnen kann.

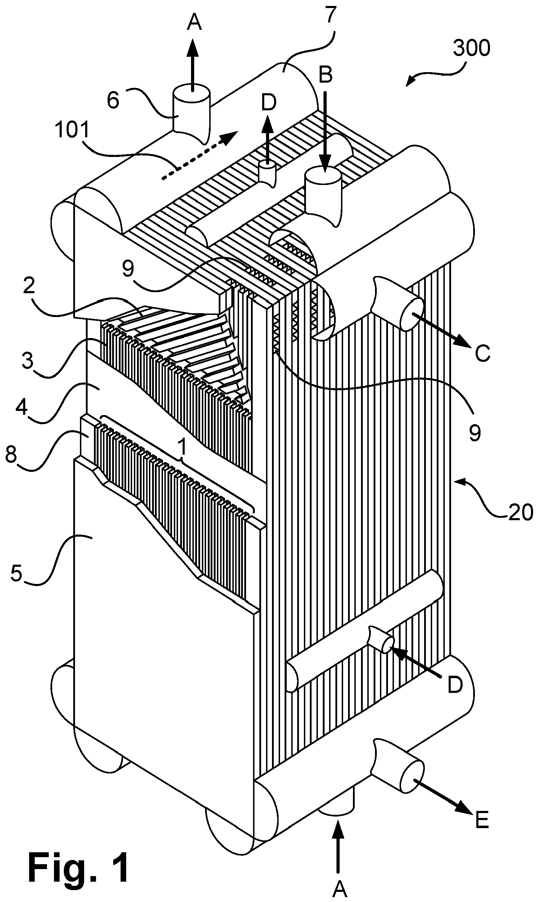

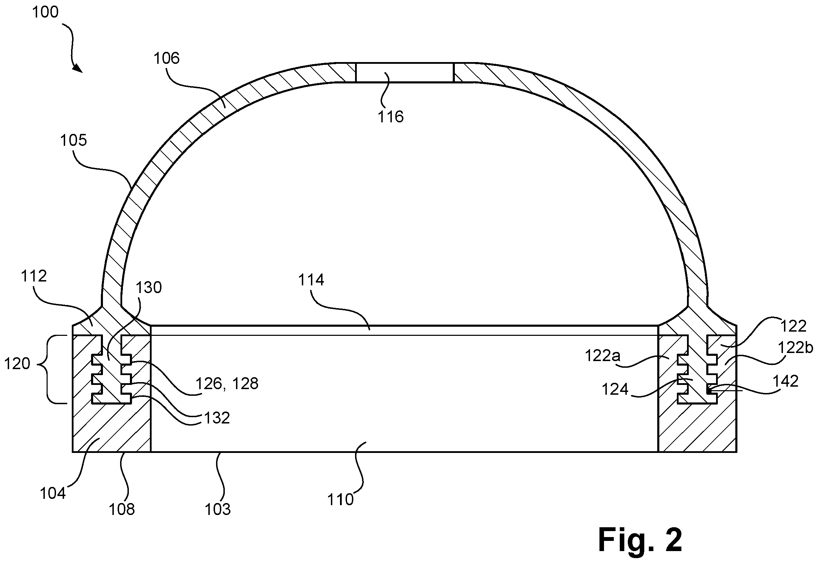

Gelötete Rippen-Platten-Wärmetauscher aus Aluminium sind in Figur 2 der erwähnten ISO 15547-2:3005 sowie auf Seite 5 der Veröffentlichung "The Standards of the Brazed Aluminium Plate-Fin Heat Exchanger Manufacturers' Association" der ALPEMA, 3. Auflage 2010, gezeigt und beschrieben. Eine Abbildung, die im Wesentlichen den dortigen Abbildungen entspricht, ist in der beigefügten Figur 1 als Stand der Technik dargestellt und wird im Folgenden vorab erläutert.

Der in Figur 1 teilweise eröffnet dargestellte Plattenwärmetauscher 300 gemäß dem Stand der Technik dient dem Wärmeaustausch von im dargestellten Beispiel fünf verschiedenen Prozessmedien A bis E.

Zum Wärmeaustausch zwischen den Prozessmedien A bis E umfasst der Plattenwärmetauscher 300 dabei eine Vielzahl von parallel zueinander angeordneten Trennblechen 4 (in den zuvor genannten Veröffentlichungen, auf die sich auch die nachfolgenden Angaben in Klammern beziehen, im Englischen als Parting Sheets bezeichnet), zwischen denen durch Strukturbleche mit Lamellen 3 (Fins) definierte Wärmeaustauschpassagen 1 für jeweils eines der Prozessmedien A bis E, die dadurch in Wärmeaustausch miteinander treten können, ausgebildet sind.

Die Strukturbleche mit den Lamellen 3 sind typischerweise gefaltet bzw. gewellt ausgebildet, wobei durch die Faltungen bzw. Wellen jeweils Strömungskanäle gebildet werden, wie auch in Figur 1 der ISO 15547-2:3005 gezeigt. Die Bereitstellung der Strukturbleche mit Lamellen 3 bietet im Vergleich zu Plattenwärmetauschern ohne Lamellen den Vorteil einer verbesserten Wärmeübertragung, einer gezielteren Fluidführung und einer Erhöhung der mechanischen (Zug-)Festigkeit. In den Wärmeaustauschpassagen 1 strömen die Prozessmedien A bis E insbesondere durch die Trennbleche 4 getrennt voneinander, können ggf. aber im Fall von perforierten Strukturblechen mit Lamellen 3 durch letztere hindurchtreten.

Die einzelnen Passagen 1 bzw. die Strukturbleche mit den Lamellen 3 sind seitlich jeweils durch sogenannte Sidebars 8 umgeben, die jedoch Einspeise- und Entnahmeöffnungen 9 freilassen. Die Sidebars 8 halten die Trennbleche 4 auf Abstand und sorgen für eine mechanische Verstärkung des Druckraumes. Zum Abschluss an zumindest zwei Seiten dienen insbesondere verstärkt ausgebildete Deckbleche 5 (Cap Sheets), die parallel zu den Trennblechen 4 angeordnet sind.

Mittels sogenannter Header 7, die mit Stutzen 6 (Nozzles) versehen sind, werden die Prozessmedien A bis E über Einspeise- und Entnahmeöffnungen 9 zu- und abgeführt. Im Eingangsbereich der Passagen 1 befinden sich weitere Strukturbleche mit sogenannten Verteilerlamellen 2 (Distributor Fins), die für eine gleichmäßige Verteilung auf die gesamte Breite der Passagen 1 sorgen. In Strömungsrichtung gesehen am Ende der Passage 1 können sich weitere Strukturbleche mit Verteilerlamellen 2 befinden, die die Prozessmedien A bis E aus den Passagen 1 in die Header 7 führen, wo sie gesammelt und über die entsprechenden Stutzen 6 abgezogen werden.

Durch die Strukturbleche mit den Lamellen 3, die weiteren Strukturbleche mit den Verteilerlamellen 2, die Sidebars 8, die Trennbleche 4 und die Deckbleche 5 wird insgesamt ein hier quaderförmiger Wärmetauscherblock 20 gebildet, wobei unter einem "Wärmetauscherblock" hier die genannten Elemente ohne die Header 7 und Stutzen 6 in einem miteinander verbundenem Zustand verstanden werden sollen. Wie in Figur 1 nicht veranschaulicht, kann der Plattenwärmetauscher 300 insbesondere aus Fertigungsgründen aus mehreren entsprechenden quaderförmigen und miteinander verbundenen Wärmetauscherblöcken 20 ausgebildet sein.

Entsprechende Plattenwärmetauscher 300 werden aus Aluminium hartgelötet. Die einzelnen Passagen 1, umfassend die Strukturbleche mit den Lamellen 3, die weiteren Strukturbleche mit den Verteilerlamellen 2, die Deckbleche 5 und die Sidebars 8 werden dabei, jeweils mit Lot versehen, aufeinander gestapelt bzw. entsprechend angeordnet und in einem Ofen erwärmt. Auf den in dieser Weise hergestellten Wärmetauscherblock 20 werden die aus Aluminium gefertigten Header 7 und Stutzen 6 aufgeschweißt. Dabei werden die Header 7 auf den Wärmetauscherblock 20 aufgeschweißt. Die Stutzen 6 können an die Header 7 angeschweißt werden. Die Stutzen 6 werden mittels Übergangsverbindungen mit weiterführenden, typischerweise aus einem Stahl bestehenden Rohrleitungen (in Figur 1 nicht dargestellt) verbunden, über die Prozessmedien zu- bzw. abgeführt werden. Die Übergangsverbindung zwischen Aluminium-Stutzen und Stahl-Rohrleitung kann mittels Explosionsschweißen erfolgen.

Aus Aluminium gefertigte Header und Stutzen weisen eine relativ hohe Wanddicke auf, was zu hohen Fertigungszeiten bei der Komplettierung der Plattenwärmetauscher führt und aufgrund thermischer Probleme zu einem Versagen der explosionsgeschweißten Übergangsverbindung führen kann. Ebenso kann an einem Aluminium-Header eine sogenannte Flüssigmetallversprödung (engl.: 'liquid metal embrittlement', LME) auftreten.

### Offenbarung der Erfindung

Dieses Problem wird gelöst durch einen Header für einen Wärmetauscher, insbesondere einen Rippen-Platten-Wärmetauscher, aus Aluminium oder aus einer Aluminiumlegierung und ein Verfahren zu dessen Herstellung mit den Merkmalen der unabhängigen Ansprüche.

Der Header für einen Wärmetauscher, insbesondere einen Rippen-Platten-Wärmetauscher, aus Aluminium oder einer Aluminiumlegierung umfasst einen Rahmen aus Aluminium oder einer Aluminiumlegierung, der einen um einen Durchgang verlaufenden Grundkörper umfasst; ein Wandelement, das eine Wand aus einem korrosionsbeständigen Stahl umfasst, die einen Rand aufweist, der um eine Öffnung verläuft, die in ihrer Form dem Durchgang entspricht; wobei der Rahmen eine sich vom Grundkörper erstreckende umlaufende Rahmen-Eingriffsstruktur umfasst und das Wandelement eine zur Rahmen-Eingriffsstruktur komplementäre, sich vom Rand erstreckende, umlaufende Wand-Eingriffsstruktur umfasst; wobei in einem Übergangsbereich die Rahmen-Eingriffsstruktur mit der Wand-Eingriffsstruktur in Eingriff steht, so dass eine umlaufende formschlüssige Verbindung zwischen dem Rahmen und dem Wandelement ausgebildet ist; wobei zumindest der Übergangsbereich mittels eines additiven Fertigungsverfahrens hergestellt ist.

Der erfindungsgemäße Header ist bevorzugt für einen gelöteten Rippen-Platten-Wärmetauscher aus Aluminium oder einer Aluminiumlegierung vorgesehen, kann allerdings im Allgemeinen auch für andere Typen von (Aluminium-/Aluminiumlegierung)Wärmetauschern, zu denen Prozessfluide über einen Header zugeführt und/oder von denen Prozessfluide über einen Header abgeführt werden, verwendet werden, d.h. an diese angeschweißt werden. In der Figurenbeschreibung wird auf den Fall eines Rippen-Platten-Wärmetauschers eingegangen, dies soll allerdings die Erfindung nicht auf solche einschränken, sondern der Header kann, wie vorstehend erwähnt, auch für andere Typen von Wärmetauschern verwendet werden.

Durch die Maßnahme, eine Stahl bzw. eine Stahlzusammensetzung für das Wandelement des Headers zu verwenden, kann die Wanddicke aufgrund der höheren Festigkeit des Stahls gegenüber Aluminium verringert werden, so dass die Fertigung des Platten-Wärmetauschers vereinfacht wird. Lediglich der Aluminium-Grundkörper muss weiterhin eine relative hohe Dicke aufweisen. Weiterhin tritt bei dem Stahl-Wandelement das Problem der Versprödung, wenn es Prozessmedien hoher Temperatur ausgesetzt ist, nicht auf. Das Problem, dass Aluminium bzw. Aluminiumlegierung nicht mit Stahl durch Schmelzschweißen verbindbar sind, wird durch den Übergangsbereich mit den Eingriffsstrukturen gelöst, dessen Herstellung durch die Verwendung eines additiven Schmelzverfahrens erreicht wird.

Die formschlüssige Verbindung wird erreicht, indem die Rahmen-Eingriffsstruktur und die Wand-Eingriffsstruktur in ihrer jeweiligen Erstreckungsrichtung weg vom Grundkörper bzw. vom Rand, eine veränderliche Dicke aufweisen. Diese Dickenvariationen sind hier zueinander komplementär, so dass sich eine Verzahnung zwischen den Eingriffsstrukturen bildet, die für eine hohe Festigkeit der Verbindung sorgt.

Die Herstellung des Übergangsbereichs erfolgt durch ein additives Fertigungsverfahren, das als 3D-Drucken angesehen werden kann. Bei einem additiven Fertigungsverfahren wird hinzuzufügendes Material bzw. Ausgangsmaterial direkt auf ein Werkstück aufgebracht. Ausgangsmaterialien können hierbei in Pulverform oder als Drähte bereitgestellt werden. Typischerweise wird das Ausgangsmaterial mittels einer Zufuhrdüse bereitgestellt und durch eine fokussierte Wärmequelle bzw. Energiequelle, z.B. einen Laser, einen Lichtbogen oder einen Elektronenstrahl, geschmolzen. Das geschmolzene Material wird dann zum Werkstück hinzugefügt, wobei, falls das Ausgangsmaterial in Pulverform bereitgestellt wird, das Pulver auch zunächst auf das Werkstück aufgetragen werden kann (mittels Zuführdüsen) und dort geschmolzen wird. Üblicherweise sind die Zufuhrdüse und die Wärmequelle an einer Rahmenkonstruktion oder einem Roboterarm montiert, so dass die Zufuhrdüse und die Wärmequelle beweglich sind und das geschmolzene Ausgangsmaterial an gewählten Positionen im dreidimensionalen Raum zum Werkstück hinzugefügt werden kann bzw. auf dieses aufgebracht werden kann. Auf diese Weise kann das Werkstück schichtweise hergestellt werden. Insbesondere wird durch additives Fertigen die Herstellung von Werkstücken ermöglicht, die eine komplizierte Geometrie aufweisen und durch andere Fertigungsverfahren, z.B. Gießen, nicht hergestellt werden können. Bei der Herstellung bzw. Erzeugung des Übergangsbereichs wird dieser ausgehend vom Grundkörper des Rahmens oder vom Rand der Wand schichtweise aufgebaut. Weitergehend können auch der Grundkörper und/oder der Rand bzw. die Wand insgesamt mittels des additiven Fertigungsverfahrens hergestellt werden. Durch den schichtweisen Aufbau ist die Herstellung durch ein additives Fertigungsverfahren am fertiggestellten Werkstück nachweisbar.

Bevorzugte additive Fertigungsverfahren sind Auftragsschweißen, additive Fertigung mittels direkter Energiedeposition (engl.: direct energy deposition), Lichtbogenauftragsschweißen bzw. lichtbogenbasiertes additives Fertigen (engl.: wire arc additive manufacturing, WAAM), Elektronenstrahl-Additive-Fertigung, Laserstrahl-Additive-Fertigung, Plasmabogen-Additive-Fertigung. Weitere bzw. überlappende Beispiele für additive Fertigungsverfahren sind Selective Laser Sintering (SLS), Electron Beam Melting/ Electron Beam Additive Manufacturing (EBM/EBAM), Fused Filament Fabrication (FFF), Schmelzschichtung (z.B. Fused Deposition Modeling, FDM), Stereolithographie (STL, SLA), Digital Light Processing (DLP), Multi Jet Modeling (MJM), Polyjet-Verfahren, Film Transfer Imaging (FTI), Laserauftragsschweißen oder Laminated Object Modeling (LOM).

Bevorzugt steht eine der Rahmen-Eingriffsstruktur zugewandte Kontakt-Außenfläche der Wand-Eingriffsstruktur mit einer der Wand-Eingriffsstruktur zugewandten Kontakt-Außenfläche der Rahmen-Eingriffsstruktur in Kontakt; wobei weiter bevorzugt die Kontakt-Außenfläche der Wand-Eingriffsstruktur die gesamte der Rahmen-Eingriffsstruktur zugewandte Außenfläche der Wand-Eingriffsstruktur ist und/oder die Kontakt-Außenfläche der Rahmen-Eingriffsstruktur die gesamte der Wand-Eingriffsstruktur zugewandte Außenfläche der Wand-Eingriffsstruktur ist.

Eine Aluminiumlegierung des Rahmens ist bevorzugt ausgewählt aus den Folgenden: AI5083 (AIMg4,5Mn, Werkstoffnummer 3.3547), Al6060 (AIMgSi, 3.3206), AISi10. Der korrosionsbeständige Stahl bzw. die Stahlzusammensetzung des Wandelements ist bevorzugt ausgewählt aus den folgenden Stahlmaterialien: Edelstähle (stainless steel) mit den Nummern AISI 316, AISI 304, AISI 321, AISI 347 gemäß der AISI-Klassifizierung (AISI: American Iron and Steel Institute) bzw. mit den Werkstoffnummern 1.4401, 1.4301, 1.4541, 1.4550.

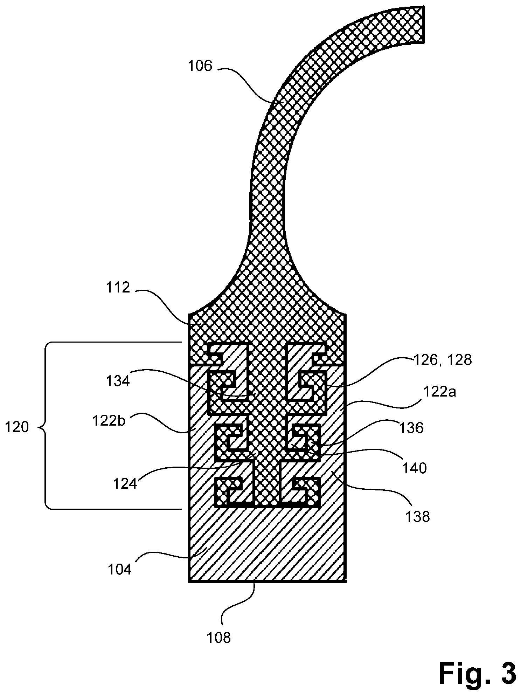

Weiterhin beträgt bevorzugt eine Länge einer zusammenhängenden in einem zur Umlaufrichtung senkrechten Querschnitt gebildeten Kontaktlinie zwischen der Rahmen-Eingriffsstruktur und der Wand-Eingriffsstruktur mindestens das 5-fache, weiter bevorzugt mindestens das 10-fache, einer Abmessung der Erstreckung der Wand-Eingriffsstruktur von dem Rand weg. Insgesamt wird (in einer dreidimensionalen Ansicht) eine zweidimensionale Kontaktfläche zwischen der Rahmen- und der Wand-Eingriffsstruktur gebildet, entsprechend den Kontakt-Außenflächen der Eingriffsstrukturen. Ein Schnitt dieser Kontaktfläche mit einer zur Umlaufrichtung senkrechten Schnittebene ergibt folglich eine eindimensionale Linie, die als Kontaktlinie bezeichnet wird. Durch eine größere Länge der Kontaktlinie relativ zur Erstreckung der Wand-Eingriffsstruktur wird die Abdichtwirkung erhöht, es wird sozusagen ein labyrinth-artiger Pfad gebildet. Hier könnte statt der Abmessung der Wand-Eingriffsstruktur ebenso die Abmessung der Erstreckung der Rahmen-Eingriffsstruktur vom Grundkörper weg als Vergleichsmaß verwendet werden. Diese beiden Abmessungen sind normalerweise gleich groß. Der Ausdruck "zusammenhängend" soll bezeichnen, dass lediglich die Länge einer der beiden durch den Querschnitt gebildeten Linien verwendet werden soll. Der Querschnitt entspricht hier der Querschnittsansicht der Figuren 2 und 3 (siehe unten).

Vorzugweise umfasst die Rahmen-Eingriffsstruktur eine Rahmen-Innenstruktur und eine Rahmen-Außenstruktur, zwischen denen die Wand-Eingriffsstruktur ausgebildet ist; oder die Rahmen-Eingriffsstruktur umfasst eine Wand-Innenstruktur und eine Wand-Außenstruktur, zwischen denen die Rahmen-Eingriffsstruktur ausgebildet ist. Dies führt zu einer Verbindung, die nur schwer gelöst werden kann und bei der sich ein langer Kontaktpfad ergibt.

Bevorzugt umfasst die Rahmen-Eingriffsstruktur wenigstens eine umlaufende Rahmen-Flanke, die sich von dem Grundkörper wegerstreckt und an der seitlich Vorsprünge angeordnet sind; wobei die Wand-Eingriffsstruktur umfasst wenigstens eine umlaufende Wand-Flanke, die sich von dem Rand wegerstreckt und an der seitlich Vorsprünge angeordnet sind. Weiter bevorzugt umfassen die an der Rahmen-Flanke angeordneten Vorsprünge sich in Richtung des Grundkörpers erstreckende Abschnitte und die an der Wand-Flanke angeordneten Vorsprünge umfassen sich in Richtung des Rands erstreckende Abschnitte. Die an der Rahmen-Flanke und der Wand-Flanke angeordneten Vorsprünge greifen ineinander ein, so dass eine feste Verbindung hergestellt wird.

Bevorzugt ist in der Wand-Eingriffsstruktur und/oder der Rahmen-Eingriffsstruktur und/oder an deren Kontaktfläche ein Sensor, insbesondere ein Temperatursensor, angeordnet. Dies ermöglicht die Erfassung von Sensordaten im Übergangsbereich, insbesondere kann die Temperatur im Übergangsbereich überwacht werden. Der Sensor kann zweckmäßigerweise während der additiven Fertigung des Übergangsbereichs mit eingebracht werden.

Vorzugsweise weisen die Wand-Eingriffsstruktur und/oder die Rahmen-Eingriffsstruktur eine mit einem Abstand vom Rand bzw. eine mit einem Abstand vom Grundkörper variierende Materialzusammensetzung auf. Dies wird durch das additive Fertigungsverfahren ermöglicht, wobei z.B., wenn das Ausgangsmaterial in Pulverform bereitgestellt wird, das Mischungsverhältnis zweier oder mehrerer Pulver variiert wird, oder wenn das Ausgangsmaterial in Drahtform bereitgestellt wird, die relative Vorschubgeschwindigkeit zweier Drähte variiert wird.

Bevorzugt weist der Rahmen eine Schweißfläche auf, die eine Form entsprechend einer Schweiß-Gegenfläche an einem Wärmetauscherblock des (Rippen-Platten-) Wärmetauschers aufweist; wobei weiter bevorzugt die Schweißfläche an einer der Rahmen-Eingriffsstruktur gegenüberliegenden Seite des Grundkörpers angeordnet ist. An dieser Schweißfläche kann der Header in einfacher Weise, ohne weitere Bauteile für die Anpassung des Headers an den Wärmetauscherblock vorsehen zu müssen, mit dem Wärmetauscherblock verschweißt werden.

Weiterhin ist bevorzugt in der Wand eine Anschlussöffnung vorgesehen. Hier kann zweckmäßigerweise eine weiterführende Stahl-Rohrleitung an den Header angeschweißt werden, die der Zu- bzw. Abfuhr eines Prozessmediums dient

Der erfindungsgemäße Wärmetauscher, der bevorzugt ein Rippen-Platten-Wärmetauscher ist, umfasst einen Header gemäß der obigen Aspekte, wobei weiter bevorzugt der Header mit einem Wärmetauscherblock des Wärmetauschers verschweißt ist.

Das Verfahren zur Herstellung eines Headers umfasst Bereitstellen eines Grundkörpers aus Aluminium oder einer Aluminiumlegierung, der einen um einen Durchgang verlaufenden Grundkörper aufweist; Bereitstellen einer Wand aus einem korrosionsbeständigen Stahl, die einen Rand aufweist, der um eine Öffnung verläuft, die in ihrer Form dem Durchgang entspricht; Erzeugen eines Übergangsbereichs mittels eines additiven Fertigungsverfahrens, wobei am Rahmen eine sich vom Grundkörper erstreckende, umlaufende Rahmen-Eingriffsstruktur erzeugt wird und an der Wand eine zur Rahmen-Eingriffsstruktur komplementäre, sich vom Rand erstreckende, umlaufende Wand-Eingriffsstruktur erzeugt wird, so dass die Rahmen-Eingriffsstruktur mit der Wand-Eingriffsstruktur in Eingriff steht und eine umlaufende formschlüssige Verbindung zwischen dem Rahmen und dem Wandelement ausgebildet wird.

Bevorzugt umfasst das Bereitstellen des Grundkörpers ein Erzeugen des Grundkörpers mittels des additiven Fertigungsverfahrens; und/oder das Bereitstellen der Wand umfasst ein zumindest teilweises Erzeugen der Wand mittels des additiven Fertigungsverfahrens.

Vorzugsweise wird im Verfahren die Rahmen-Eingriffsstruktur aus Aluminium oder einer Aluminiumlegierung erzeugt und die Wand-Eingriffsstruktur aus einem korrosionsbeständigen Stahl erzeugt; wobei im additiven Fertigungsverfahren Schichten aufgebracht werden und beim Aufbringen von Schichten das Aluminium oder die Aluminiumlegierung in Richtung quer zur Umlaufrichtung abwechselnd mit dem korrosionsbeständigen Stahl innerhalb einer aufzubringenden Schicht verwendet wird.

Weiter bevorzugt werden eine Zusammensetzung der Aluminiumlegierung und/oder eine Zusammensetzung des korrosionsbeständigen Stahls mit der Zeit bzw. über eine Abfolge von Schichten variiert. Durch diese Variation der Zusammensetzungen kann ein stetiger Übergang von Materialeigenschaften erreicht werden.

Zu weiteren Merkmalen und Vorteilen des erfindungsgemäßen Headers sowie des Verfahrens zu dessen Herstellung sei ausdrücklich auch auf die nachfolgende Beschreibung der Zeichnungen verwiesen.

Die Erfindung wird nachfolgend unter Bezugnahme auf die beigefügten Zeichnungen näher erläutert, welche die vorliegende Erfindung und ihre Merkmale gegenüber dem Stand der Technik veranschaulichen.

### Kurze Beschreibung der Zeichnungen

Figur 1 zeigt einen Rippen-Platten-Wärmetauscher in vereinfachter isometrischer Darstellung.
Figur 2 zeigt eine Querschnittsansicht eines Headers gemäß einer bevorzugten Ausführungsform der Erfindung.
Figur 3 zeigt eine Teil-Querschnittsansicht eines erfindungsgemäßen Headers, die eine bevorzugte Ausführung des Übergangsbereichs bzw. der Eingriffsstrukturen illustriert.
Figuren 4A und 4B zeigen Ablaufdiagramme bevorzugter Ausführungsformen des erfindungsgemäßen Verfahrens.

### Ausführungsform(en) der Erfindung

Figur 1 wurde bereits in der Beschreibungseinleitung bei der Würdigung des Standes der Technik erläutert. Die dort verwendeten Bezugszeichen und Erläuterungen gelten abgesehen vom Aufbau des Headers auch für die nachfolgend erläuterten Figuren.

Figur 2 zeigt eine Querschnittsansicht eines erfindungsgemäßen Headers 100. Bezugnehmend auf Figur 1 kann dieser als Header 7 verwendet werden, wobei die Blickrichtung senkrecht zur Zeichenebene dem Pfeil 101 in Figur 1 entspricht und der Schnitt in etwa auf Höhe der Position des Stutzens 6 bzw. der Öffnung, in die dieser mündet, erfolgte. Es wird darauf hingewiesen, dass die Elemente der Figur 2 nicht notwendigerweise maßstabsgetreu dargestellt sind, insbesondere kann die Größe einzelner Elemente angepasst sein, um die wesentliche Struktur des Headers klar kenntlich zu machen.

Der Header 100 umfasst einen Rahmen bzw. Headerrahmen 103 und ein Wandelement bzw. Headerwandelement 105. Der Rahmen 103 besteht aus Aluminium oder einer Aluminiumlegierung und weist einen Grundkörper 104 auf. Der Rahmen bzw. dessen Grundkörper kann (in der Figur) von oben betrachtet (also in Durchgangsrichtung des Durchgangs 110 betrachtet) im Wesentlichen eine rechteckige Form (wie der Header 7 in Figur 1) aufweisen, also z.B. im Wesentlichen aus vier Leisten bestehen, die ein Rechteck bilden, wobei die Ecken abgerundet sein können. Ebenso ist hier eine ovale Form oder Ähnliches denkbar. Wie bereits erwähnt kann der Rahmen bzw. der Grundkörper auch gekrümmt sein, also nicht entlang einer zur Blickrichtung der Figur parallelen Ebene verlaufen. Dies ist dann vorteilhaft, wenn die entsprechende Gegenfläche des Wärmetauscherblocks eine gekrümmte Form aufweist.

Der Rahmen 103 bzw. dessen Grundkörper 104 weist weiterhin eine Schweißfläche 108 auf, die dazu eingerichtet ist, mit einer entsprechenden Schweißgegenfläche, die am Wärmetauscherblock des nicht dargestellten Rippen-Platten-Wärmetauschers vorgesehen ist, verschweißt zu werden. Die Schweißfläche 108 ist also entsprechend der Schweißgegenfläche geformt. Wenn die Schweißgegenfläche eine gekrümmte Form aufweist, kann auch die Schweißfläche entsprechend gekrümmt geformt sein, folgt also der Krümmung der Schweißgegenfläche. In der Figur ist zur Vereinfachung eine ebene Schweißfläche 108 dargestellt. Ebenso ist es möglich, dass der Rahmen bzw. der Grundkörper insgesamt gekrümmt sind, so dass der Grundkörper eine in Umlaufrichtung konstante Höhe senkrecht zur Schweißfläche aufweist. Der Rahmen 103 bzw. dessen Grundkörper 104 umgibt einen Durchgang 110. Der Ausdruck "Umlaufrichtung" bezieht sich auf die Richtung (umlaufend) um den Durchgang 110 bzw. die Öffnung 114 (s.u.).

Das Wandelement 105 besteht aus einem korrosionsbeständigen Stahl bzw. einem Edelstahl und umfasst eine Wand 106. Die Wand 106 weist eine gewölbte Form auf, wobei ein Rand 112 der Wand eine Öffnung 114 umgibt, deren Geometrie (Form und Größe) an die Geometrie des Durchgangs 110 des Grundkörpers angepasst ist bzw. dieser entspricht. In der Wand 106 ist weiterhin eine Anschlussöffnung 116 vorgesehen. An diese Anschlussöffnung kann ähnlich wie in Figur 1 ein Stutzen angeschweißt werden oder auch eine weiterführende Stahl-Rohrleitung direkt angeschweißt werden, da die Wand aus einem Stahl besteht. Falls ein Stutzen vorgesehen ist, sollte dieser aus einem korrosionsbeständigen Stahl bestehen. Im Prinzip ist es auch möglich, einen stutzenartigen Vorsatz direkt in der Wand auszubilden. Die Wand umgibt also einen Hohlraum mit der Öffnung 114 und der Anschlussöffnung 116. Dabei dient die vom Rand umgebene Öffnung zur Verbindung an den Rahmen und über diesen an einen Wärmetauscherblock und die Anschlussöffnung dient zur Verbindung an weiterführende Rohrleitungen.

In einem Übergangsbereich 120 (zwischen Rahmen und Wand) ist am Rahmen eine Rahmen-Eingriffsstruktur 122 und am Rand 112 der Wand 106 eine Wand-Eingriffsstruktur 124 vorgesehen. Diese erstrecken sich vom Grundkörper bzw. vom Rand weg und erstrecken sich umlaufend um den Durchgang 110 bzw. die Öffnung 114. Die Rahmen-Eingriffsstruktur ist an einer der Schweißfläche gegenüberliegenden Seite des Grundkörpers angeordnet. Die Rahmen-Eingriffsstruktur 122 steht mit der zu ihr komplementären Wand-Eingriffsstruktur 124 in Eingriff, so dass eine formschlüssige Verbindung zwischen Wand und Rahmen gebildet wird, wobei die Wand-Eingriffsstruktur 122 und die Rahmen-Eingriffsstruktur an einer Kontaktfläche 126 miteinander in Kontakt stehen. Der Begriff "komplementär" ist hier insbesondere so zu verstehen, dass die Geometrie (d.h. Form und Abmessung) der der Rahmen-Eingriffsstruktur zugewandten Außenfläche der Wand-Eingriffsstruktur im Wesentlichen gleich (bis auf geringfügige Unterschiede, die sich daraus ergeben, dass die Außenflächen aneinander liegen) der Geometrie der der Wand-Eingriffsstruktur zugewandten Außenfläche der Rahmen-Eingriffsstruktur ist. Die der jeweilig anderen Eingriffsstruktur zugewandten Außenflächen bilden so die Kontaktfläche 126 zwischen Rahmen- und Wand-Eingriffsstruktur. Die formschlüssige Verbindung ist entsprechend fluiddicht ausgebildet. In dem gezeigten Querschnitt bildet die Kontaktfläche 126 eine Kontaktlinie 128.

Die Rahmen-Eingriffsstruktur 122 besteht in der in Figur 2 dargestellten Ausführungsform aus einer (inneren) Rahmen-Innenstruktur 122a und einer (äußeren) Rahmen-Außenstruktur 122b, zwischen denen die Wand-Eingriffsstruktur 124 angeordnet ist. Hier ist ebenso eine umgekehrte Anordnung möglich, d.h. dass die Wand-Eingriffsstruktur aus einer Wand-Innenstruktur und einer Wand-Außenstruktur, zwischen denen die Rahmen-Eingriffsstruktur angeordnet ist. Innen/Außen bezieht sich hier auf das Innere des Durchgangs bzw. der Öffnung.

Die Rahmen-Eingriffsstruktur und die Wand-Eingriffsstruktur werden jeweils durch wenigstens eine umlaufende Rahmen-Flanke (hier zwei: je eine für die Rahmen-Innenstruktur und -Außenstruktur) bzw. Wand-Flanke (hier eine) gebildet, die sich vom Grundkörper bzw. vom Rand wegerstreckt, wobei an den Flanken (Rahmen-Flanken und Wand-Flanken), bevorzugt umlaufende, Vorsprünge vorgesehen sind, die ineinandergreifen. Durch diese Vorsprünge ergibt sich eine mit dem Abstand vom Grundkörper bzw. vom Rand variierende Dicke der Rahmen-Eingriffsstruktur und der Wand-Eingriffsstruktur. In Figur 2 sind zur Illustration beispielhaft die Wand-Flanke 130 und die daran befindlichen Vorsprünge 132 mit Bezugszeichen versehen.

Die Rahmen-Eingriffsstruktur 122 besteht aus Aluminium oder einer Aluminiumlegierung, z.B. der gleichen wie der Grundkörper des Rahmens. Die Wand-Eingriffsstruktur 124 besteht aus einem korrosionsbeständigen Stahl, z.B. dem gleichen Stahl wie die Wand und deren Rand. Die Rahmen-Eingriffsstruktur und die Wand-Eingriffsstruktur können jeweils einstückig, insbesondere materialschlüssig, mit dem Rahmen bzw. der Wand sein, in diesem Sinne können sie als Bestandteile bzw. Abschnitte des Rahmens bzw. der Wand angesehen werden. Der Rahmen umfasst dann also den (Rahmen-)Grundkörper und die Rahmen-Eingriffsstruktur, wobei der Ausdruck, dass sich die Rahmen-Eingriffsstruktur vom Rahmen wegerstreckt, so zu verstehen ist, dass sich die Rahmen-Eingriffsstruktur vom Grundkörper wegerstreckt.

Der Header 100 wird zumindest im Übergangsbereich 120 mittels eines additiven Fertigungsverfahrens hergestellt, weitergehend können auch die weiteren Abschnitte des Rahmens und/oder des Wandelements (d.h. der Grundkörper und/oder die Wand) mittels eines additiven Fertigungsverfahrens hergestellt werden. Zwar wird im Allgemeinen auch durch ein additives Fertigungsverfahren keine materialschlüssige Verbindung (entsprechend einer Schweißverbindung) zwischen dem Aluminium-Rahmen und der Stahl-Wand erreicht, allerdings ermöglicht es das additive Fertigungsverfahren, die Rahmen-Eingriffsstruktur und die Wand-Eingriffsstruktur im Übergangsbereich so auszubilden, dass diese an der Kontaktfläche miteinander in Kontakt stehen, so dass eine fluiddichte Verbindung der Wand mit dem Rahmen geschaffen wird.

Weiterhin ist in Figur 2 beispielhaft ein im Übergangsbereich angeordneter Sensor 142, z.B. ein Temperatursensor, samt nach außen geführter Sensorleitung dargestellt. Der Sensor wird zweckmäßigerweise während der additiven Fertigung des Übergangsbereichs in diesem angeordnet.

Figur 3 zeigt eine Teil-Querschnittsansicht eines erfindungsgemäßen Headers, die eine bevorzugte Ausführung des Übergangsbereichs bzw. der Eingriffsstrukturen illustriert. Diese Ausführungsform entspricht im Wesentlichen der Ausführungsform der Figur 2, wobei hier der Übergangsbereich an lediglich einer Seite dargestellt ist. Der Unterschied liegt in der unterschiedlichen Ausgestaltung der Rahmen-Eingriffsstruktur und Wand-Eingriffsstruktur 124. Die Rahmen-Eingriffsstruktur weist wieder eine Rahmen-Innenstruktur 122a und einer Rahmen-Außenstruktur 122b auf.

Auch sind die Eingriffsstrukturen wieder durch Flanken mit daran befindlichen Vorsprüngen gebildet. Z.B. ist die Rahmen-Eingriffsstruktur 124 durch eine Rahmen-Flanke 134 und daran befindliche seitliche Vorsprünge 136 gebildet. Diese Vorsprünge 136 erstrecken sich teilweise auf den Rand 112 zu (d.h. entgegengesetzt der Flanke, die sich vom Rand wegerstreckt). Entsprechend erstrecken sich die (komplementären) Vorsprünge der Wand-Eingriffsstruktur auf den Grundkörper 104 des Rahmens zu. Beispielhaft sind hier eine Rahmen-Flanke 138 der Rahmen-Eingriffsstruktur (genauer der Rahmen-Innenstruktur 122a) und ein daran befindlicher Vorsprung 140 mit Bezugszeichen versehen. In einem Querschnitt mit einer zum Grundkörper bzw. zum Rand parallelen Schnittfläche zerfällt die Schnittfläche der Rahmen-Eingriffsstruktur bzw. der Wand-Eingriffsstruktur entsprechend jeweils in mehrere umlaufende Teilschnittflächen, wenn der Schnitt auf Höhe der sich in Richtung des Rahmens bzw. des Randes erstreckenden Abschnitte der jeweiligen Vorsprünge erfolgt.

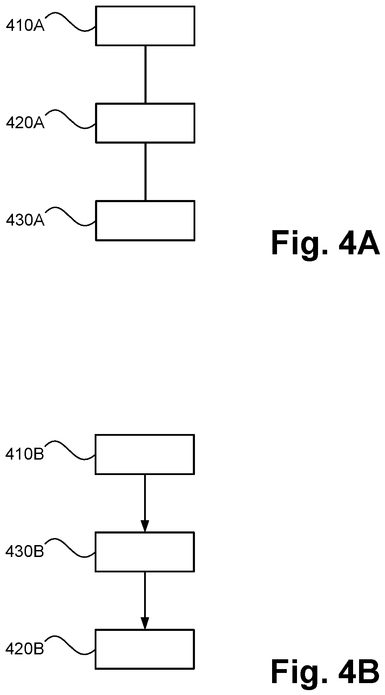

Figuren 4A und 4B zeigen Ablaufdiagramme bevorzugter Ausführungsformen des erfindungsgemäßen Verfahrens. In Figur 4A sind dabei die prinzipiellen Schritte des Verfahrens ohne spezifische Reihenfolge dargestellt.

Das Verfahren umfasst in Schritt 410A Bereitstellen des Grundkörpers aus Aluminium oder einer Aluminiumlegierung, der einen um einen Durchgang verlaufenden Grundkörper aufweist, und in Schritt 420A Bereitstellen einer Wand aus einem korrosionsbeständigen Stahl, die einen Rand aufweist, der um eine Öffnung verläuft, die in ihrer Form dem Durchgang entspricht. Der Grundkörper und/oder die Wand können teilweise oder ganz mit einem additiven Fertigungsverfahren erzeugt werden. In Schritt 430A wird der Übergangsbereich mittels des additiven Fertigungsverfahrens erzeugt. Dabei werden die im Zusammenhang mit den Figuren 2 und 3 erläuterten Eingriffsstrukturen erzeugt. Es wird also am Rahmen eine sich vom Grundkörper erstreckende, umlaufende Rahmen-Eingriffsstruktur erzeugt und an der Wand eine zur Rahmen-Eingriffsstruktur komplementäre, sich vom Rand erstreckende, umlaufende Wand-Eingriffsstruktur erzeugt, so dass die Rahmen-Eingriffsstruktur mit der Wand-Eingriffsstruktur in Eingriff steht und eine umlaufende formschlüssige Verbindung zwischen dem Rahmen und dem Wandelement ausgebildet wird.

In Figur 4B ist weiterhin die Reihenfolge der Schritte spezifiziert. Hierbei stellt Schritt 410B den Schritt des Bereitstellens des Grundkörpers dar, entsprechend Schritt 410A der Figur 4A. Schritt 420B stellt den Schritt des Bereitstellens der Wand dar, entsprechend Schritt 420A. Schritt 430B stellt das Erzeugen des Übergangsbereichs dar, entsprechend Schritt 430A. Hier erfolgt das Bereitstellen der Wand (Schritt 420B) nach dem Erzeugen des Übergangsbereichs (Schritt 430B). Es kann etwa wie folgt vorgegangen werden: Zunächst (Schritt 410B) wird der Grundkörper bereitgestellt, z.B. kann dies durch das additive Fertigungsverfahren erfolgen. Anschließend (Schritt 430B) wird mit dem additiven Fertigungsverfahren ausgehend vom Grundkörper der Übergangsbereich mit den Eingriffsstrukturen erzeugt. Abschließend (Schritt 420B) wird die Wand, insbesondere durch das additive Fertigungsverfahren ausgehend vom Übergangsbereich, bereitgestellt. Vorteilhafterweise kann so der gesamte Header mittels des additiven Fertigungsverfahrens hergestellt werden. Selbstverständlich kann hier auch in umgekehrter Reihenfolge vorgegangen werden (nicht dargestellt), d.h. es wird zunächst die Wand bereitgestellt, dann der Übergangsbereich ausgehend vom Rand der Wand erzeugt und abschließend der Grundkörper ausgehend vom Übergangsbereich erzeugt. Zweckmäßigerweise wird für alle Schritte das additive Fertigungsverfahren verwendet.

## Patentansprüche

1. Header (100) für einen Wärmetauscher aus Aluminium oder einer Aluminiumlegierung, umfassend
einen Rahmen (103) aus Aluminium oder einer Aluminiumlegierung, der einen um einen Durchgang (110) verlaufenden Grundkörper (104) umfasst; **gekennzeichnet durch**
ein Wandelement (105), das eine Wand (106) aus einem korrosionsbeständigen Stahl umfasst, die einen Rand (112) aufweist, der um eine Öffnung (114) verläuft, die in ihrer Form dem Durchgang entspricht;
wobei der Rahmen eine sich vom Grundkörper erstreckende umlaufende Rahmen-Eingriffsstruktur (122) umfasst und das Wandelement eine zur Rahmen-Eingriffsstruktur komplementäre, sich vom Rand erstreckende, umlaufende Wand-Eingriffsstruktur (124) umfasst;
wobei in einem Übergangsbereich (120) die Rahmen-Eingriffsstruktur mit der Wand-Eingriffsstruktur in Eingriff steht, so dass eine umlaufende formschlüssige Verbindung zwischen dem Rahmen und dem Wandelement ausgebildet ist;
wobei zumindest der Übergangsbereich mittels eines additiven Fertigungsverfahrens hergestellt ist.

2. Header nach Anspruch 1, wobei eine der Rahmen-Eingriffsstruktur zugewandte Kontakt-Außenfläche der Wand-Eingriffsstruktur mit einer der Wand-Eingriffsstruktur zugewandten Kontakt-Außenfläche der Rahmen-Eingriffsstruktur in Kontakt steht; wobei bevorzugt die Kontakt-Außenfläche der Wand-Eingriffsstruktur die gesamte der Rahmen-Eingriffsstruktur zugewandte Außenfläche der Wand-Eingriffsstruktur ist und/oder die Kontakt-Außenfläche der Rahmen-Eingriffsstruktur die gesamte der Wand-Eingriffsstruktur zugewandte Außenfläche der Wand-Eingriffsstruktur ist.

3. Header nach einem der vorstehenden Ansprüche, wobei eine Länge einer zusammenhängenden in einem zur Umlaufrichtung senkrechten Querschnitt gebildeten Kontaktlinie (128) zwischen der Rahmen-Eingriffsstruktur und der Wand-Eingriffsstruktur mindestens das 5-fache, bevorzugt mindestens das 10-fache, einer Abmessung der Erstreckung der Wand-Eingriffsstruktur von dem Rand weg beträgt.

4. Header nach einem der vorstehenden Ansprüche, wobei
die Rahmen-Eingriffsstruktur eine Rahmen-Innenstruktur (122a) und eine Rahmen-Außenstruktur (122b) umfasst, zwischen denen die Wand-Eingriffsstruktur ausgebildet ist;
oder wobei die Rahmen-Eingriffsstruktur eine Wand-Innenstruktur und eine Wand-Außenstruktur umfasst, zwischen denen die Rahmen-Eingriffsstruktur ausgebildet ist.

5. Header nach einem der vorstehenden Ansprüche, wobei die Rahmen-Eingriffsstruktur wenigstens eine umlaufende Rahmen-Flanke (138), die sich von dem Grundkörper wegerstreckt und an der seitlich Vorsprünge (140) angeordnet sind, umfasst; und wobei die Wand-Eingriffsstruktur wenigstens eine umlaufende Wand-Flanke (130, 134), die sich von dem Rand wegerstreckt und an der seitlich Vorsprünge (132, 136) angeordnet sind, umfasst.

6. Header nach einem der vorstehenden Ansprüche, wobei die an der Rahmen-Flanke (138) angeordneten Vorsprünge (140) sich in Richtung des Grundkörpers erstreckende Abschnitte umfassen; und wobei die an der Wand-Flanke (134) angeordneten Vorsprünge (136) sich in Richtung des Rands erstreckende Abschnitte umfassen.

7. Header nach einem der vorstehenden Ansprüche, wobei in der Wand-Eingriffsstruktur und/oder der Rahmen-Eingriffsstruktur und/oder an deren Kontaktfläche ein Sensor (142), insbesondere ein Temperatursensor, angeordnet ist.

8. Header nach einem der vorstehenden Ansprüche, wobei die Wand-Eingriffsstruktur und/oder die Rahmen-Eingriffsstruktur eine mit einem Abstand vom Rand bzw. eine mit einem Abstand vom Grundkörper variierende Materialzusammensetzung aufweisen.

9. Header nach einem der vorstehenden Ansprüche, wobei der Rahmen eine Schweißfläche (108) aufweist, die eine Form entsprechend einer SchweißGegenfläche an einem Wärmetauscherblock des Wärmetauschers aufweist; wobei bevorzugt die Schweißfläche an einer der Rahmen-Eingriffsstruktur gegenüberliegenden Seite des Grundkörpers angeordnet ist.

10. Header nach einem der vorstehenden Ansprüche, wobei in der Wand eine Anschlussöffnung (116) vorgesehen ist.

11. Wärmetauscher, insbesondere Rippen-Platten-Wärmetauscher, umfassend einen Header nach einem der vorstehenden Ansprüche, wobei bevorzugt der Header mit einem Wärmetauscherblock des Wärmetauschers verschweißt ist.

12. Verfahren zur Herstellung eines Headers nach einem der Ansprüche 1-10, umfassend
Bereitstellen (410A, 410B) eines Grundkörpers aus Aluminium oder einer Aluminiumlegierung, der einen um einen Durchgang verlaufenden Grundkörper aufweist;
Bereitstellen (420A, 420B) einer Wand aus einem korrosionsbeständigen Stahl, die einen Rand aufweist, der um eine Öffnung verläuft, die in ihrer Form dem Durchgang entspricht;
Erzeugen (430A, 430B) eines Übergangsbereichs mittels eines additiven Fertigungsverfahrens, wobei am Rahmen eine sich vom Grundkörper erstreckende, umlaufende Rahmen-Eingriffsstruktur erzeugt wird und an der Wand eine zur Rahmen-Eingriffsstruktur komplementäre, sich vom Rand erstreckende, umlaufende Wand-Eingriffsstruktur erzeugt wird, so dass die Rahmen-Eingriffsstruktur mit der Wand-Eingriffsstruktur in Eingriff steht und eine umlaufende formschlüssige Verbindung zwischen dem Rahmen und dem Wandelement ausgebildet wird.

13. Verfahren nach Anspruch 12, wobei das Bereitstellen des Grundkörpers ein Erzeugen des Grundkörpers mittels des additiven Fertigungsverfahrens umfasst; und/oder wobei das Bereitstellen der Wand ein zumindest teilweises Erzeugen der Wand mittels des additiven Fertigungsverfahrens umfasst.

14. Verfahren nach einem der Ansprüche 12 oder 13, wobei die Rahmen-Eingriffsstruktur aus Aluminium oder eine Aluminiumlegierung erzeugt wird und die Wand-Eingriffsstruktur aus einem korrosionsbeständigen Stahl erzeugt wird; wobei im additiven Fertigungsverfahren Schichten aufgebracht werden und beim Aufbringen von Schichten das Aluminium oder die Aluminiumlegierung in Richtung quer zur Umlaufrichtung abwechselnd mit dem korrosionsbeständigen Stahl innerhalb einer aufzubringenden Schicht verwendet wird.

15. Verfahren nach Anspruch 14, wobei eine Zusammensetzung der Aluminiumlegierung und/oder eine Zusammensetzung des korrosionsbeständigen Stahls mit der Zeit bzw. über eine Abfolge von Schichten variiert werden.
